# EUROPÄISCHE PATENTSCHRIFT

(11) **EP 2 767 419 B1**
(45) Veröffentlichungstag und Bekanntmachung des Hinweises auf die Patenterteilung: **27.06.2018**
(21) Anmeldenummer: 14152061.9
(22) Anmeldetag: 22.01.2014
(51) Int. Cl.: B60G 3/20, B60G 7/00, B60G 7/02, F16F 13/14, F16F 13/16

(54) **Radaufhängung für ein Rad einer Achse eines Kraftfahrzeugs**
Wheel suspension for a wheel of an axle of a motor vehicle
Suspension de roue pour une roue d'un essieu d'un véhicule automobile

(30) Priorität: 16.02.2013 DE 102013002712
(43) Veröffentlichungstag der Anmeldung: 20.08.2014
(73) Patentinhaber: AUDI AG, 85045 Ingolstadt (DE)
(72) Erfinder: Conrad, Thomas, 91757 Treuchtlingen (DE); Langhoff, Hans-Jürgen, 85101 Lenting (DE); Hudler, Roland, 85077 Manching (DE)

(56) Entgegenhaltungen:
- EP-A2- 1 123 821
- DE-A1- 3 043 113
- DE-A1- 3 343 392
- DE-A1- 3 912 924
- DE-A1- 10 057 191
- DE-T2-602004 000 145
- US-A- 5 975 509
- US-B1- 6 224 046

## Beschreibung

Die Erfindung betrifft eine Radaufhängung für ein Rad einer Achse eines Kraftfahrzeugs gemäß der im Oberbegriff des Patentanspruches 1 angegebenen Art.

Aus der EP 1 123 821 A2 ist eine Radaufhängung eines Kraftfahrzeughinterrades mit fünf Lenkern bekannt. Hierbei ist der Radträger über drei im Wesentlichen in Kraftfahrzeugquerrichtung ausgerichtete sowie zwei im Wesentlichen in Kraftfahrzeuglängsrichtung ausgerichteten Lenkern am Kraftfahrzeugaufbau gelagert.

Die DE 60 2004 000145 T2 offenbart ein Kraftfahrzeug mit einem Fahrwerk, welches mit zwei starren Armen ausgestaltet ist, wobei die die beiden starren Arme karosserieseitig über ein hydraulisch schwingungsdämpfendes Lager gelagert sind.

Aus der DE 39 12 924 D1 ist bekannt einen Querlenker über ein hydraulisch dämpfendes Lager am Radträger zu lagern. Die US 5 975 509 A offenbart einen Führungsarm oder einen Längslenker einer Radaufhängung, wobei sowohl das fahrzeugseitige als auch das radträgerseitige Lager als ein hydraulisch dämpfbares Elastomerlager ausgebildet ist.

Die DE 30 43 113 A1 offenbart eine Vierlenkeraufhängung einer Starrachse, wobei die Längslenker sowohl an ihren fahrzeugseitigen Enden als auch an ihren achsseitigen Enden mit hydraulisch dämpfbaren Elastomerlagern versehen sind.

Systembedingt sind Fünf-Lenker-Achsen sehr steif in Längs- und Querrichtung. Dies liegt u.a. darin begründet, dass für eine präzise Radführung die Lagerstellen entweder als Kugel- oder als sehr steife Elastomerlager ausgeführt sind. Es ist zwar bekannt, zur Verbesserung des Fahrkomforts weichere Lager einzusetzen, diese führen jedoch zu unerwünschten Schwingungen im Achssystem.

Es besteht somit ein Zielkonflikt zwischen dem Anspruch einer Längsnachgiebigkeit und der Vermeidung von Schwingungen. Zur Lösung dieses Zielkonflikts wurde bereits versucht, durch den Einsatz von hydraulisch, dämpfenden Lager für die Lagerung des Hilfsrahmens, die gewünschte Längsnachgiebigkeit zu erzielen. Als nachteilig hat sich hierbei jedoch erwiesen, dass große Maßen, nämlich Hilfsrahmen mit Getriebe und Radaufhängung, in Bewegung gesetzt werden müssen. Zudem ist eine akustische Verbesserung der Achse hiermit nur eingeschränkt möglich.

Der Erfindung liegt die Aufgabe zugrunde, eine Radaufhängung für ein Rad einer Achse eines Kraftfahrzeugs gemäß der im Oberbegriff des Patentanspruches 1 angegebenen Art derart weiterzubilden, dass bei einer Fünf-Lenker-Hinterachse unter Beibehaltung des Fahrkomforts eine höhere Längsnachgiebigkeit gewährleistet ist.

Diese Aufgabe wird durch die kennzeichnenden Merkmale des Patentanspruches 1 in Verbindung mit seinen Oberbegriffsmerkmalen gelöst. Der unteranspruch bildet eine vorteilhafte Weiterbildung der Erfindung.

In bekannter Art und Weise umfasst die Radaufhängung für ein Rad einer Achse eines Kraftfahrzeugs einen Radträger, der über fünf Radführungselemente geführt ist. Hierbei sind die fünf Radführungselemente jeweils an ihrer dem Radträger abgewandten Seite über ein Lager an einem Hilfsrahmen gelagert.

Erfindungsgemäß ist bei zumindest einem, im Wesentlichen in Fahrzeuglängsrichtung (FL) ausgerichteten ersten Radführungselement, das hilfsrahmenseitige Lager als ein hydraulisch, dämpfbares Elastomerlager ausgebildet.

Durch die erfindungsgemäße Maßnahme, nämlich bei zumindest einem, im Wesentlichen in Fahrzeuglängsrichtung ausgerichteten Radführungselement das hilfsrahmenseitigen Lagers als ein hydraulisch, dämpfbares Elastomerlager auszubilden, werden die beim Überfahren von Fahrbahnunebenheiten auftretenden Schwingungen durch das hydraulisch, dämpfbare Lager wirksam gedämpft. In vorteilhafter Weise ist nunmehr gewährleistet, dass beim Überfahren von Fahrbahnunebenheiten die erforderliche Längsnachgiebigkeit ermöglicht ist, so dass der Fahrkomfort des Fahrzeugs verbessert wird. Ein weiterer Vorteil ist, dass nur die Massen der Radaufhängung, Rad und Bremse bewegt werden.

Lediglich der Vollständigkeit halber wird darauf hingewiesen, dass unter einem im Wesentlichen in Fahrzeuglängsrichtung ausgerichteten Radführungselement ein Radführungselement zu verstehen ist, das überwiegend Längskräfte aufnimmt. Erfindungsgemäß handelt es sich bei dem ersten Radführungselement um einen in Fahrtrichtung betrachtet vorderen Längslenker. Da dieser Lenker überwiegend Fahrzeug-Längskräfte in radialer Richtung aufnimmt, ist hier ein Einbau eines entsprechenden Lagers besonders wirksam. Erfindungsgemäß ist das erste Radführungselement auch radträgerseitig über ein hydraulisch, dämpfbares Lager am Radträger gelagert. Hierdurch ist ein erhöhter Fahrkomfort gewährleistet.

Um die Längsnachgiebigkeit weiter zu verbessern und zur Vermeidung unerwünschter Schwingungen, ist auch bei zumindest einem, im Wesentlichen in Fahrzeugquerrichtung ausgerichteten zweiten Radführungselement, das hilfsrahmenseitige Lager als ein hydraulisch, dämpfbares Lager ausgebildet.

Vorzugsweise ist bei dem zweiten Radführungselement auch radträgerseitig ein hydraulisch dämpfbares Lager vorgesehen ist. Dies wirkt sich positiv auf den Fahrkomfort aus.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:

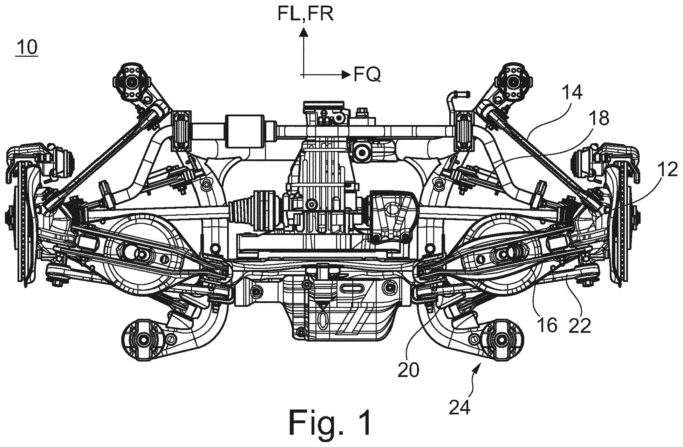

- Fig. 1: eine Ansicht von unten auf eine erfindungsgemäße Radaufhängung für ein Rad einer Achse eines Kraftfahrzeugs.

Fig. 1 zeigt eine insgesamt mit der Bezugsziffer 10 bezeichnete Radaufhängung für ein Rad einer Achse eines Kraftfahrzeugs. Ein Radträger 12 ist über fünf Radführungselemente 14, 16, 18, 20, 22 an einem Hilfsrahmen 24 gelagert.

Hierbei ist das in Fahrtrichtung FR betrachtet vordere Radführungselement 14, nachfolgend auch als vorderer Längslenker bezeichnet, sowohl hilfsrahmenseitig als auch radträgerseitig über als hydraulisch dämpfbare Elastomerlager ausgebildete Lager am Hilfsrahmen 24 bzw. am Radträger 12 gelagert.

Entsprechend verhält es sich bei dem im Wesentlichen in Kraftfahrzeugquerrichtung FQ ausgerichteten Radführungselement 16, nachfolgend als Querlenker bezeichnet. Auch beim Querlenker 16 sind sowohl die hilfsrahmenseitige als auch die radträgerseitigen Lager als hydraulisch dämpfbare Elastomerlager ausgebildet.

Aufgrund der Ausbildung der oben genannten Lager als hydraulisch dämpfbare Elastomerlager ist in vorteilhafter Weise sichergestellt, dass beim Überfahren von Fahrbahnunebenheiten die für den Fahrkomfort notwendige erforderliche Längsnachgiebigkeit der Radaufhängung 10 ermöglicht ist.

### Bezugszeichenliste

- 10: Radaufhängung
- 12: Radträger
- 14: Radführungselemente / vorderer Lenker
- 16: Radführungselemente / Querlenker
- 18: Radführungselemente
- 20: Radführungselemente
- 22: Radführungselemente
- 24: Hilfsrahmen

- FL: Kraftfahrzeuglängsrichtung
- FQ: Kraftfahrzeugquerrichtung
- FR: Fahrzeugrichtung

## Patentansprüche

1. Radaufhängung (10) für ein Rad einer Achse eines Kraftfahrzeugs, bei der ein Radträger (12) über fünf Radführungselemente (14, 16, 18, 20, 22) geführt ist, wobei die Radführungselemente (14, 16, 18, 20, 22) radträgerseitig jeweils über ein Lager am Radträger (17) gelagert sind, und an ihren dem Radträger (12) abgewandten Seite jeweils über ein Lager an einem Hilfsrahmen (24) gelagert sind, **dadurch gekennzeichnet, dass** bei zumindest einem, in Wesentlichen in Fahrzeuglängsrichtung (FL) ausgerichteten ersten Radführungselement (14), das hilfsrahmenseitige und das radträgerseitige Lager als ein hydraulisch dämpfbares Elastomerlager ausgebildet sind, wobei es sich bei dem ersten Radführungselement (14) um einen in Fahrtrichtung (FR) betrachtet vorderen Längslenker handelt, und dass bei zumindest einem, in Wesentlichen in Fahrzeugquerrichtung (FQ) ausgerichteten zweiten Radführungselement (16), das hilfsrahmenseitige Lager als ein hydraulisch dämpfbares Lager ausgebildet ist.

2. Radaufhängung (10) nach Anspruch 1, **dadurch gekennzeichnet, dass** das zweite Radführungselement (16) auch radträgerseitig über ein hydraulisch dämpfbares Lager am Radträger (12) gelagert ist.

## Claims

1. Wheel suspension (10) for a wheel of an axle of a motor vehicle, in the case of which a wheel carrier (12) is guided over five wheel control elements (14, 16, 18, 20, 22), wherein the wheel control elements (14, 16, 18, 20, 22) are each mounted on the wheel carrier (17) on the wheel carrier side by means of a bearing, and at the side facing away from the wheel carrier (12) are each mounted by means of a bearing on an auxiliary frame (24) **characterised in that** in the case of at least one, substantially oriented in the vehicle longitudinal direction (FL) first wheel control element (14), the bearing on the auxiliary frame side and the bearing on the wheel carrier side are formed as a hydraulically dampable elastomer bearing, wherein the first wheel control element (14) is a longitudinal control arm which is at the front viewed in direction of driving (FR), and in the case of at least one, substantially orientated in the vehicle transverse direction (FQ) second wheel control element (16), the bearing on the auxiliary frame side is formed as a hydraulically dampable bearing.

2. Wheel suspension (10) according to claim 1, **characterised in that** the second wheel control element (16) is mounted also on the wheel carrier side by means of a hydraulically dampable bearing on the wheel carrier (12).

## Revendications

1. Suspension de roue (10) pour une roue d'un essieu d'un véhicule automobile, dans laquelle un support de roue (12) est guidé par l'intermédiaire de cinq éléments de guidage de roue (14, 16, 18, 20, 22)
et dans laquelle les éléments de guidage de roue (14, 16, 18, 20, 22) sont logés, du côté du support de roue, au niveau du support de roue (17) à chaque fois par l'intermédiaire d'un palier et, du côté opposé au support de roue (12), au niveau d'un faux-châssis (24) à chaque fois par l'intermédiaire d'un palier,
**caractérisée en ce que,** pour au moins un premier élément de guidage de roue (14) orienté globalement dans la direction longitudinale de véhicule (FL), le palier côté faux-châssis et le palier côté support de roue sont réalisés comme des paliers en élastomère à amortissement hydraulique, lequel premier élément de guidage de roue (14) est un bras oscillant longitudinal avant, vu dans le sens d'avance (FR), et **en ce que**, pour au moins un deuxième élément de guidage de roue (16) orienté globalement dans la direction transversale de véhicule (FQ), le palier côté faux-châssis est réalisé comme un palier à amortissement hydraulique.

2. Suspension de roue (10) selon la revendication 1, **caractérisée en ce que** le deuxième élément de guidage de roue (16) est aussi logé côté support de roue au niveau du support de roue (12) par l'intermédiaire d'un palier à amortissement hydraulique.
